# FASCICULE DE BREVET EUROPEEN

(11) **EP 3 912 754 B1**
(45) Date de publication et mention de la délivrance du brevet: **31.12.2025**
(21) Numéro de dépôt: 21169064.9
(22) Date de dépôt: 19.04.2021
(51) Int. Cl.: B23K 1/00, B23K 1/008, F28D 9/00, B23K 101/14

(54) **PROCÉDÉ DE FABRICATION D'UN ÉCHANGEUR DE CHALEUR COMPORTANT UNE SONDE DE TEMPÉRATURE**
VERFAHREN ZUR HERSTELLUNG EINES WÄRMETAUSCHERS, DER EINE TEMPERATURSONDE UMFASST
METHOD FOR MANUFACTURING A HEAT EXCHANGER COMPRISING A TEMPERATURE SENSOR

(30) Priorité: 15.05.2020 FR 2004870
(43) Date de publication de la demande: 24.11.2021
(73) Titulaire: L'Air Liquide, société anonyme pour l'Étude et l'Exploitation des procédés Georges Claude, 75007 Paris (FR)
(72) Inventeur: SEIWERT, Jacopo, 78350 Les Loges en Josas (FR); WAGNER, Marc, 78350 Les Loges en Josas (FR); CREMIEUX, Marie-Adelaide, 78350 Jouy en Josas (FR); BELMEKKI, Younes, 78350 Les Loges en Josas (FR)
(74) Mandataire: Air Liquide

(56) Documents cités:
- EP-A2- 1 319 890
- DE-A1- 102016 000 246
- US-A1- 2013 075 054
- US-A1- 2018 283 816

## Description

La présente invention est relative à un procédé de fabrication d'un échangeur de chaleur du type à plaques brasées comme décrit dans le préambule des revendications 1 et 13.

La présente invention trouve notamment application dans le domaine de la séparation de gaz par cryogénie, en particulier de la séparation d'air par cryogénie (connue sous l'acronyme anglais « ASU » pour unité de séparation d'air) exploitée pour la production d'oxygène gazeux sous pression. En particulier, la présente invention peut s'appliquer à la fabrication d'un échangeur de chaleur qui vaporise un débit liquide, par exemple de l'oxygène liquide, de l'azote et/ou de l'argon par échange de chaleur avec un débit gazeux, par exemple l'air ou l'azote.

La présente invention peut également s'appliquer à un échangeur de chaleur qui vaporise au moins un débit de mélange liquide-gaz, en particulier un débit de mélange à plusieurs constituants, par exemple un mélange d'hydrocarbures, par échange de chaleur avec au moins un autre fluide, par exemple du gaz naturel.

Une technologie couramment utilisée pour les échangeurs de chaleur est celle des échangeurs à plaques brasées, qui permettent d'obtenir des organes très compacts offrant une grande surface d'échange et de faibles pertes de charge. Ces échangeurs sont formés d'un ensemble de plaques parallèles entre lesquelles sont généralement insérées des éléments intercalaires, tels des structures ondulées ou ondes, qui forment des structures d'échange thermique à ailettes. Les plaques empilées forment entre elles un empilement de passages plats pour différents fluides à mettre en relation d'échange thermique.

Lors de la fabrication de l'échangeur, les plaques, les éléments intercalaires à ailettes et les autres éléments constitutifs de l'échangeur sont plaqués les uns contre les autres et sont ensuite liés entre eux par brasage dans un four sous vide à des températures qui peuvent être comprises entre 550 et 900 °C.

Du fait de leur compacité et de leur construction monolithique, il est très difficile d'effectuer des mesures locales de températures ou de flux thermiques au sein de ces échangeurs brasés. Ainsi, dans l'immense majorité des procédés dans lesquels ils sont implantés, l'opérateur n'a accès qu'à la puissance thermique totale échangée entre fluides, grâce à un bilan énergétique réalisé entre l'entrée et la sortie de chaque fluide. Cela complique fortement la caractérisation de ces échangeurs et ne permet pas, par exemple, de mesurer isolément le coefficient d'échange thermique de chacun des passages.

En utilisation, l'absence de données locales limite les possibilités de contrôle du procédé. En particulier, certains phénomènes physiques particuliers qui peuvent avoir lieu au sein de l'échangeur, tels que des changements de phase ou des réactions chimiques, se traduisent par une variation locale du flux thermique ou de la température, qui dépend aussi de la position considérée dans l'échangeur.

La mesure locale de températures ou de flux thermiques permettrait de détecter in situ de mauvaises conditions de fonctionnement des échangeurs : mal-distribution des fluides, diminution de la performance de certaines zones de l'échangeur due par exemple à des phénomènes de bouchage ou de distillation locale. Il serait aussi utile de bénéficier de mesures locales de températures ou de flux thermiques pour surveiller l'évolution des performances des échangeurs à plaques et ailettes au cours de leur durée de vie.

Face à ces besoins, on constate que les solutions de mesure de températures existantes ne donnent pas entière satisfaction, notamment du fait de la complexité des pièces de maintien utilisées, ou de leur mise en œuvre.

Des méthodes de mesure de températures « in situ » existent, mais elles ne permettent actuellement que de mesurer la température au sein des fluides. Elles sont de plus intrusives, car elles modifient les écoulements des fluides au sein des passages d'échange. Et parce qu'elles ne sont pas prévues dès la construction de l'échangeur, leur mise en œuvre est relativement complexe, couteuse et peu robustes.

Il existe des méthodes de mesure de flux thermiques mais elles nécessitent d'intercaler une sonde entre les passages de l'échangeur. Il n'est plus possible de braser l'échangeur en une pièce, ce qui fait perdre l'essentiel de ses avantages. De plus, la sonde représente également un surcoût important et rajoute nécessairement une résistance thermique qui n'est pas compatible avec les coefficients d'échange thermiques typiques des échangeurs considérés. Enfin, cette solution est difficilement envisageable à une échelle industrielle, dès que les échangeurs possèdent un nombre conséquent de passages, notamment du fait de la difficulté d'assemblage.

Par ailleurs, on connaît du document JP-A-2014169809 un échangeur de chaleur comprenant une sonde de température qui est insérée dans un tube, le tube étant lui-même inséré dans des rainures pratiquées dans une plaque de l'échangeur. Le tube est brasé entre deux plaques puis, lorsque la phase de brasage est terminée, la sonde est introduite dans le tube. Cette méthode pose plusieurs problèmes. La présence du tube augmente nécessairement la résistance thermique entre la plaque, dont on souhaite mesurer la température, et la sonde, ce qui dégrade la précision de la mesure. Le tube augmente également la place nécessaire à l'introduction de la sonde, ce qui augmente le caractère intrusif de la méthode.

On connait aussi du document US 2018/283816 A1 un système et une méthode pour détecter et corriger les fuites croisées dans des échangeurs de chaleur utilisés dans des installations pétrochimiques ou des raffineries. Il met en œuvre une surveillance intelligente basée sur des capteurs et une plateforme d'analyse de données. Parmi les types d'échangeurs de chaleur abordés, l'échangeur de chaleur de type plaque et ailette brasé (en anglais Brazed Aluminum Plate-Fin Heat Exchanger, ou BAHX) est spécifiquement illustré et décrit.

La présente invention a notamment pour but de résoudre tout ou partie des problèmes mentionnés ci-avant, en proposant un procédé de fabrication d'un échangeur de chaleur à plaques brasées permettant de réaliser au sein de l'échangeur des mesures de températures locales et/ou des mesures de flux thermiques de façon plus précise, à la fois en termes de valeur mesurée et de position dans l'échangeur, et ce sans perturber le fonctionnement de l'échangeur, ni augmenter son encombrement.

Dans ce but, l'invention a pour objet un procédé de fabrication d'un échangeur de chaleur du type à plaques et ailettes brasées comprenant les étapes suivantes :
a) empiler avec espacement un ensemble de plaques parallèlement entre elles et à une direction longitudinale de façon à définir entre lesdites plaques une pluralité de passages adaptés pour l'écoulement suivant la direction longitudinale d'un premier fluide à mettre en relation d'échange thermique avec au moins un deuxième fluide, lesdites plaques étant délimitées par une paire de bords longitudinaux s'étendant suivant la direction longitudinale et une paire de bords latéraux s'étendant suivant une direction latérale perpendiculaire à la direction longitudinale,
b) former au moins une des plaques empilées à l'étape a) en superposant, suivant une direction d'empilement perpendiculaire aux directions longitudinale et latérale, au moins un premier produit plat et un deuxième produit plat l'un sur l'autre, au moins l'un des premier et deuxième produits plats comprenant au moins une rainure s'étendant parallèlement aux plaques et débouchant vers l'extérieur de l'empilement formé à l'étape a) par au moins une ouverture d'un bord latéral ou longitudinal,
c) agencer au moins un agent de brasage entre le premier produit plat et le deuxième produit plat,
d) agencer au moins une sonde de température dans la rainure, un espace libre étant ménagé entre au moins une partie de la sonde de température d'une part et les parois internes de la rainure d'autre part,
e) braser l'ensemble de plaques, y compris le premier produit plat sur le deuxième produit plat, avec fusion de l'agent de brasage et diffusion d'au moins une partie de l'agent de brasage dans le premier produit plat et le deuxième produit plat, au moins une partie de l'espace libre ménagé entre la sonde de température et les parois internes de la rainure étant remplie d'agent de brasage solidifié.

Selon le cas, l'échangeur selon l'invention peut comprendre l'une ou plusieurs des caractéristiques ci-dessous :
- la sonde de température comprend :
   ∘ une partie thermosensible configurée pour mesurer la température d'une surface de la plaque formée à l'étape b) en un endroit souhaité,
   ∘ des organes conducteurs électriques configurés pour relier la partie thermosensible à un circuit électrique de mesure, et
   ∘ une gaine formant manchon autour de la partie thermosensible et autour d'au moins une partie des organes conducteurs électriques, la gaine s'étendant entre une première extrémité agencée au niveau de la partie thermosensible et une deuxième extrémité agencée à l'extérieur de l'empilement de plaques, de préférence la deuxième extrémité est située à une distance d'au moins 100 mm de l'ouverture.
- la gaine comprend un matériau métallique choisi parmi : l'aluminium, le nickel, le platine, le tungstène, un alliage d'aluminium, un alliage de nickel, un alliage de platine, un alliage de tungstène, un acier inoxydable, un acier réfractaire.
- la gaine a une épaisseur comprise entre 0,1 et 1 mm et/ou un diamètre extérieur compris entre 0,5 et 3 mm.
- la gaine a une longueur comprise entre 100 et 10000 mm.
- la gaine est déformable.
- la sonde de température comprend un matériau isolant électrique agencé entre la gaine et la partie thermosensible, ledit matériau isolant électrique étant choisi parmi : un oxyde de magnésium, un oxyde d'aluminium.
- la sonde de température est une sonde à thermocouple comprenant une paire de fils conducteurs formés de métaux différents, les fils conducteurs étant joints en un point de jonction, dit jonction de mesure, formant la partie thermosensible de la sonde de température.
- les fils conducteurs sont reliés chacun à des fils de prolongation respectifs destinées à être joints aux bornes d'un circuit électrique de mesure de façon à y former des jonctions dites de référence, une pièce de raccordement formant manchon autour des liaisons entre les fils conducteurs et leurs fils de prolongation respectifs, ladite pièce de raccordement étant raccordée à la deuxième extrémité de la gaine.
- les métaux formant les fils conducteurs sont configurés pour former une sonde à thermocouple d'un type choisi parmi : le type E, le type J, le type K, le type N, le type M, le type R, le type S, le type B.
- la sonde de température est une sonde à résistance comprenant une paire de fils conducteurs reliés une résistance de mesure formant la partie thermosensible de la sonde de température, la résistance de mesure comportant, en tant que matériau de résistance, un matériau céramique ou un matériau métallique, en particulier du platine ou un alliage de platine.
- l'étape e) a lieu dans un four de brasage, l'empilement de plaques étant situé dans une première région du four où la température maximale au cours du cycle de brasage est comprise entre 550 et 900 °C, de préférence entre 550 et 650 °C, et la deuxième extrémité de la gaine étant située dans une deuxième région où la température est inférieure à ladite température maximale dans la première région.

En outre, l'invention concerne un échangeur de chaleur du type à plaques et ailettes brasées, comprenant un ensemble de plaques parallèles entre elles et à une direction longitudinale de façon à définir entre lesdites plaques une pluralité de passages adaptés pour l'écoulement d'un premier fluide à mettre en relation d'échange thermique avec au moins un deuxième fluide, lesdits plaques étant délimitées par une paire de bords longitudinaux s'étendant suivant la direction longitudinale et une paire de bords latéraux s'étendant suivant une direction latérale perpendiculaire à la direction longitudinale, au moins une des plaques étant formée par au moins un premier produit plat et un deuxième produit plat et superposés l'un sur l'autre suivant une direction d'empilement perpendiculaire aux directions longitudinale et latérale et brasés au moyen d'un revêtement ou une feuille d'agent de brasage ayant une température de fusion prédéterminée agencée sur au moins une de leurs surfaces opposées, au moins l'un des premier et deuxième produits plats comprenant au moins une rainure s'étendant parallèlement aux plaques et débouchant vers l'extérieur de l'empilement par au moins une ouverture d'un bord latéral ou longitudinal, au moins une sonde de température étant agencé dans la rainure et au moins une partie de l'espace entre la sonde de température et les parois internes de la rainure étant remplie d'agent de brasage solidifié.

En particulier, la sonde de température peut comprendre une partie thermosensible configurée pour mesurer la température d'une surface de la plaque formée à l'étape b) en un endroit souhaité, des organes conducteurs électriques configurés pour relier la partie thermosensible à un circuit électrique de mesure, et une gaine formant manchon autour de la partie thermosensible et d'au moins une partie des organes conducteurs électriques, la gaine s'étendant entre une première extrémité agencée au niveau de la partie thermosensible et une deuxième extrémité agencée à l'extérieur de l'empilement de plaques, de préférence la deuxième extrémité est située à une distance d'au moins 100 mm, de préférence comprise entre 100 et 10000 mm, de l'ouverture.

L'invention va maintenant être mieux comprise grâce à la description qui va suivre, donnée à titre d'exemple non limitatif et faite en référence aux figures ci-annexées parmi lesquelles :
Fig. 1 est un vue tridimensionnelle d'un échangeur à plaques brasées pouvant être fabriqué par un procédé selon l'invention.
Fig. 2 schématise différents mode de réalisation de produits plat et de rainures selon l'invention.
Fig. 3 schématise des sondes de température selon des modes de réalisation de l'invention.
Fig. 4 schématise d'autres mode de réalisation de produits plat et de rainures selon l'invention.
Fig. 5 schématise d'autres mode de réalisation de produits plat et de rainures selon l'invention.
Fig. 6 schématise un produit plat comportant une pluralité de rainures selon un mode de réalisation de l'invention.

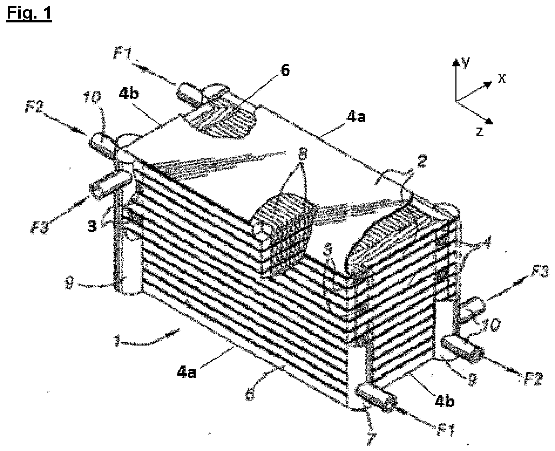

La Figure 1 représente un échangeur de chaleur 1 du type à plaques et ailettes brasées comprend un empilement de plaques 2 qui s'étendent suivant deux dimensions, longueur et largeur, respectivement suivant la direction longitudinale z et la direction latérale x. Les plaques 2 sont disposées l'une au-dessus de l'autre, parallèlement entre elles, et avec espacement. Elles forment ainsi entre elles plusieurs ensembles de passages 3, certains passages étant prévus pour l'écoulement d'un premier fluide F1, et d'autres passages prévus pour l'écoulement d'au moins un autre fluide F2, F3 à mettre en relation d'échange de chaleur indirect avec F1 via les plaques 2. La direction latérale x est orthogonale à la direction longitudinale z et parallèle aux plaques 2. Les fluides s'écoulent de préférence dans la longueur de l'échangeur parallèlement à la direction longitudinale z.

De préférence, chaque passage a une forme parallélépipédique et plate. L'écart entre deux plaques 2 successives, correspondant à la hauteur du passage, mesurée suivant la direction d'empilement y des plaques 2, est petit devant la longueur et la largeur de chaque plaque successive. La direction d'empilement y est orthogonale aux plaques.

Les passages 3 sont bordés par des barres de fermeture 6 qui n'obturent pas complétement les passages mais laissent des ouvertures libres pour l'entrée ou la sortie des fluides correspondants. Les plaques 2 sont délimitées par des bords périphériques 4 qui sont de préférence parallèles deux à deux. Les bords périphériques 4 comprennent une paire de bords longitudinaux 4a s'étendant suivant la direction longitudinale z et une paire de bords latéraux 4b s'étendant suivant la direction latérale x.

L'échangeur 1 comprend des collecteurs de forme semi-tubulaire 7, 9 munis d'entrées et de sorties 10 pour l'introduction des fluides dans l'échangeur 1 et l'évacuation des fluides hors de l'échangeur 1. Ces collecteurs présentent des ouvertures moins larges que les passages. Des zones de distribution agencées en aval des collecteurs d'entrée et en amont des collecteurs de sortie servent à canaliser de façon homogène les fluides vers ou depuis toute la largeur des passages.

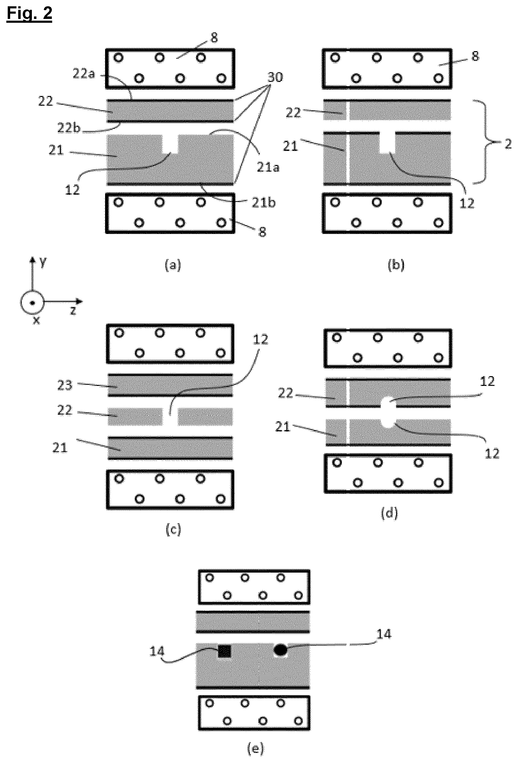

De préférence, au moins une partie des passages 3 comprend des éléments intercalaires 8 à ailettes qui s'étendent avantageusement suivant la largeur et la longueur des passages de l'échangeur, parallèlement aux plaques 2. Dans l'exemple illustré, les éléments intercalaires 8 comprennent des ondes d'échange thermique sous forme de tôles ondulées. Dans ce cas, on appelle « ailettes » les jambes d'onde qui relient les sommets et les bases successifs de l'onde. Les éléments intercalaires 8 peuvent aussi revêtir d'autres formes particulières définies selon les caractéristiques d'écoulement de fluide souhaitées. De manière plus générale, le terme « ailettes » couvre des lames ou autres surfaces secondaires d'échange thermique, qui s'étendent depuis les surfaces primaires d'échange thermiques, c'est-à-dire les plaques de l'échangeur, dans les passages de l'échangeur. Notons que sur les Figures 2, 4 et 5, on a représenté des ondes 8 droites perforées agencées dans les passages de l'échangeurs situés de part et d'autre de la plaque 2. Bien entendu, tout type d'ondes est envisageable, notamment des ondes droites non perforées, des ondes à arête de hareng pour « herringbone » en anglais, également appelées ondes ondulées pour « wavy » en anglais, des ondes à décalage partiel...

Lors de la fabrication de l'échangeur 1, on approvisionne un ensemble de plaques 2 que l'on empile parallèlement entre elles et à la direction longitudinale z. Les plaques 2 sont espacées les unes des autres par les barres de fermetures 6. Après assemblage des autres éléments constitutifs de l'échangeurs, notamment les ondes d'échanges, les ondes de distribution..., l'empilement est brasé afin de solidariser les éléments de l'échangeurs les uns ou autres. De préférence, les plaques et tout ou partie des autres éléments constitutifs de l'échangeur sont en aluminium ou en alliage d'aluminium.

Au moins une des plaques 2 de l'échangeur est formée par superposition d'au moins un premier produit plat 21 et un deuxième produit plat 22 l'un sur l'autre. Les premier et deuxième produits plats 21, 22 sont brasés ensemble, et avec les autres plaques 2 qui sont aussi brasées entre elles. De préférence, on brase simultanément la plaque 2 formée par la superposition des produits plats et les autres plaques 2 de l'échangeur. Il est aussi envisageable de procéder au brasage des produits plats entre eux puis de les empiler avec les autres plaques 2 et de procéder au brasage de cet empilement.

Comme on le voit sur les exemples de la Figure 2, au moins l'un des premier et deuxième produits plats 21, 22 comprend au moins une rainure 12. Par rainure, on peut entendre également une saignée, une fente ou un évidement pratiqué dans l'épaisseur de la plaque 2. La rainure 12 s'étend parallèlement aux plaques 2 et débouche vers l'extérieur de l'empilement par au moins une ouverture 5 située sur un bord latéral ou longitudinal 4a, 4b du premier produit plat ou du deuxième produit plat, suivant le produit plat dans lequel la rainure est ménagée. Lorsque le premier produit plat et le deuxième produit plat sont superposés, la rainure 12 forme une cavité au sein de la plaque 2 configurée pour recevoir au moins une sonde de température 14.

La sonde 14 et la rainure 12 sont configurées de sorte qu'il subsiste un espace libre entre au moins une partie de la sonde de température 14 d'une part et les parois internes de la rainure 12 d'autre part. En effet, l'existence d'un jeu entre la sonde 14 et la rainure 12 est nécessaire pour permettre l'introduction de la sonde et limite le risque de déformer l'empilement. Une forme extérieure irrégulière ou dissymétrique de la sonde et/ou le fait que les formes de la rainure et de la sonde ne sont pas parfaitement complémentaires peuvent aussi contribuer à la création d'espace libre autour de la sonde 14. Certaines parties de la surface extérieure de la sonde peuvent être en contact par les parois internes de la rainure 12 et d'autres non.

Selon l'invention, la sonde température 14 est agencée dans la rainure 12 avant de procéder au brasage des plaques de l'échangeur. L'empilement, qui comprend ladite au moins une plaque 2 formée des produits plats superposés avec la sonde 14 agencée entre les produits plats est ensuite brasé de manière à assembler entre eux les différents éléments de l'empilement. En agençant la sonde directement dans la rainure 12, avant le brasage, on évite des manipulations supplémentaires sur l'empilement une fois brasé, ce qui réduit le risque de l'endommager.

On brase ensuite l'ensemble de plaques 2 comprenant la sonde de température 14, y compris le premier produit plat 21 sur le deuxième produit plat 22.

Lors du brasage, la liaison des éléments constitutifs de l'échangeur est réalisée avec utilisation d'un métal d'apport, appelé brasure ou agent de brasage 30, ayant une température de fusion prédéterminée. De préférence, la température de fusion prédéterminée est comprise entre 550 et 900 °C, de préférence encore comprise entre 550 et 650 °C.

L'assemblage est obtenu en chauffant l'agent de brasage 30 qui fond et diffuse au sein des pièces à braser, sans fusion de celles-ci. L'agent de brasage 30 peut se présenter sous la forme de couches de revêtement déposées, généralement par co-laminage ou éventuellement sous la forme d'une solution liquide ou d'un gel déposé à la main, sur des surfaces des plaques ou sous la forme de feuilles ou feuillards disposées entre les plaques. Les plaques, les éléments intercalaires à ailettes et les autres éléments constitutifs de l'échangeur sont de préférence plaqués les uns contre les autres par un dispositif de compression appliquant une force de compression aux plaques 2, comprise typiquement entre 20 000 à 40 000 N/m². De préférence, l'empilement est introduit dans un four sous vide et brasé à des températures qui peuvent être comprises entre 550 et 900 °C, de préférence comprises entre 550 et 650 °C. L'agent de brasage 30 est de préférence de l'aluminium ou un alliage d'aluminium.

Lors de sa fusion, l'agent de brasage 30, qui est agencé entre le premier produit plat 21 et le deuxième produit plat 22, s'écoule autour de la sonde 14 et comble au moins une partie de l'espace existant entre la sonde de température 14 et les parois internes de la rainure 12. Notons que l'agent de brasage solidifié est agencé de façon à être en contact thermique direct avec la sonde d'une part et avec les parois de la rainure d'autre part.

On assure ainsi une excellente conduction thermique entre la sonde de température 14 et les produits plat formant la plaque dont on veut mesurer la température.

La sonde de température 14 est introduite directement dans la rainure, sans qu'il ne soit nécessaire d'utiliser une pièce intermédiaire de maintien entre la sonde et les premier et deuxième produits plats. Cela minimise la résistance thermique entre la sonde et les produits plats, ce qui améliore grandement la précision de la mesure. De plus, le brasage des premier et deuxième produits plats entre eux assure un excellent contact du point de vue thermique et limite la résistance thermique, ce qui permet de ne pas nuire aux performances de l'échangeur en fonctionnement. La sonde de température est introduite de façon non intrusive au sein de l'échangeur. La sonde est incluse dans une plaque 2 de l'échangeur, ce qui permet de mesurer une température locale dans l'échangeur. On minimise également l'encombrement du dispositif.

Notons que lors du brasage, l'agent de brasage 30 fond et diffuse au sein des produits plats 21, 22. Il est envisageable que l'agent 30 diffuse aussi au sein de la sonde 14. Mais il est aussi possible que la sonde 14 ne soit pas brasée, c'est-à-dire qu'il n'y ait pas diffusion de l'agent 30 au sein du matériau de la sonde 14.

Notons que la sonde 14 peut être placée dans la rainure 12 soit avant de superposer les produits plats ou une fois que les produits plats sont superposés, par l'ouverture 5.

De préférence, la sonde 14 est placée dans la rainure après que les produits plats aient été empilés et maintenus serrés l'un contre l'autre par une force de compression, en vue du brasage ultérieur de l'empilement. Ainsi, on s'assure que les produits plats sont bien en contact l'un avec l'autre avant d'introduire la sonde et on évite de déplacer un élément de l'empilement lors de l'insertion de la sonde 14, ce qui pourrait compromettre l'intégrité de la matrice brasée et de là le fonctionnement de l'échangeur. Cela permet aussi de vérifier que la sonde n'a pas des dimensions externes trop importantes par rapport aux dimensions internes de la rainure.

Notons que s'il y a plusieurs rainures 12, il y a au moins une sonde 14 prévue par rainure 12.

Dans le cadre de la présente invention, la sonde de température 14 peut être toute sonde configurée pour réaliser des mesures de température par contact.

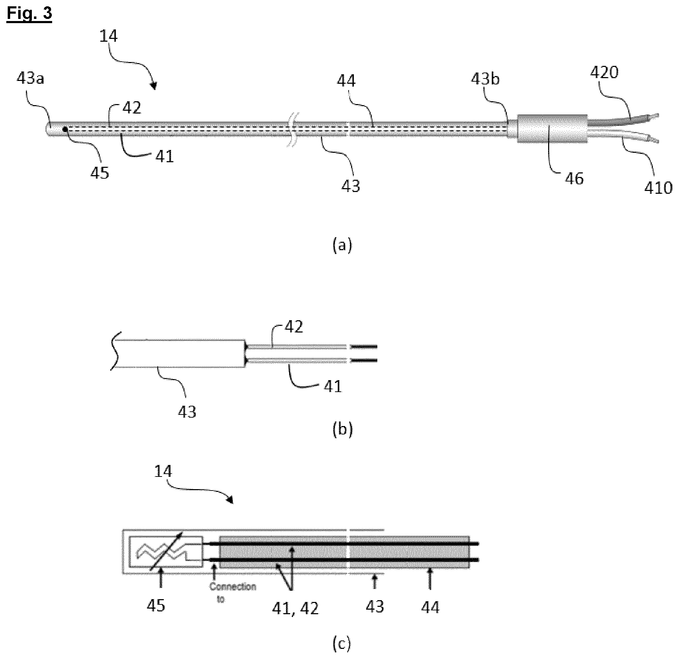

En référence aux exemples de la Figure 3, la sonde de température 14 comprend une partie thermosensible 45 configurée pour mesurer la température d'une surface de la plaque 2 formée à l'étape b) en un endroit souhaité. La sonde comprend en outre des organes conducteurs électriques 41, 42 dont les extrémités sont reliées électriquement d'une part à la partie thermosensible 45 et sont adaptées pour être reliées d'autre part à un circuit électrique de mesure, qui se trouve à l'extérieur de l'empilement, afin de ne pas être exposé à des températures trop élevées.

De préférence, la sonde 14 comprend une gaine 43 forme manchon autour de la partie thermosensible 45 et autour d'au moins une partie des organes conducteurs électriques 41, 42. Le rôle de la gaine 43 est de protéger les éléments les plus fragiles de la sonde au moment du brasage. Il est à noter que la gaine 43 est un élément constitutif de la sonde et qu'elle est solidaire de ses autres éléments constitutifs, notamment la partie thermosensible 45 et les organes conducteurs 41, 42.

Notons qu'il reste envisageable d'utiliser une sonde formée d'organes conducteurs 41, 42 sans gaine, par exemple des fils électriques isolés entre eux, joints entre eux au niveau de la partie thermosensible. Préférentiellement, pour que les fils électriques soient isolés entre eux, ils peuvent être recouvert notamment d'un matériau vitreux, d'un matériau céramique, d'un matériau à base de polyamide ou depolytétrafluoroéthylène. On remplit alors au moins une partie de l'espace laissé libre autour des fils dans la rainure avec l'agent de brasage.

De préférence, la gaine 43 s'étend longitudinalement entre une première extrémité 43a agencée au niveau de la partie thermosensible 45 et une deuxième extrémité 43b agencée à l'extérieur de l'empilement de plaques 2, de préférence à une distance d'au moins 100 mm de l'ouverture 5 pour permettre de l'isoler thermiquement, pendant le brasage, du reste de l'échangeur. Ainsi, on déporte suffisamment les autres éléments nécessaires à la prise de mesure, notamment les dispositifs d'alimentation électrique, de mesure de tension électrique par rapport à l'empilement afin de ne pas les soumettre à des températures trop importantes lors du brasage.

En particulier, la deuxième extrémité 43b peut être agencée à une distance comprise entre 100 et 10000 mm de l'ouverture 5, de préférence entre 500 et 5000 mm.

Notons que lors du brasage, le remplissage de l'espace existant entre la sonde de température 14 et les parois internes de la rainure 12 a lieu au moins autour de la partie thermosensible 45 puisque c'est dans cette région qu'il est nécessaire d'assurer le meilleur contact thermique possible entre la sonde et la plaque 2 dont on souhaite mesurer la température. De préférence, la gaine 43 est entourée sur toute sa périphérie d'agent de brasage 30 resolidifié, au moins au niveau de la partie thermosensible 45.

De préférence, la gaine 43 comprend un matériau métallique choisi parmi : l'aluminium, le nickel, le platine, le tungstène, le niobium, le molybdène, le tantale, un alliage des métaux précités, par exemple un alliage de nickel avec du chrome et du fer, comme l'Inconel^{®}, l'acier inoxydable, ou l'acier réfractaire.

Les matériaux cités offrent différentes caractéristiques de tenue en température, tenue mécanique, facilité de fabrication et coût, qui permettent d'adapter le matériau à l'application.

Notons qu'il peut y avoir ou pas brasage de la gaine, c'est-à-dire diffusion de l'agent de brasage dans le matériau de la gaine.

Le matériau de la gaine peut éventuellement être identique à celui utilisé pour le reste de l'échangeur, afin d'optimiser le brasage de cet élément, et donc de diminuer la résistance thermique entre la sonde et les produits plats, ce qui améliore la représentativité de la mesure de température. Cela permet que la diffusion de l'agent de brasage dans la gaine et l'obtention d'un excellent contact thermique entre les produits plats et la sonde. On obtient également une bonne homogénéité de matériau, ce qui évite de perturber le champ de température. En particulier, la gaine 43 et les plaques de l'échangeur pourront être formée d'aluminium ou d'alliage d'aluminium. L'agent de brasage sera de l'aluminium ou un alliage d'aluminium.

Il est aussi possible que la gaine 43 comprenne un matériau céramique, ce type de matériau offrant une bonne résistance à la température.

Dans le cadre de l'invention, notons qu'on entend par « matériau métallique » un matériau formé d'un métal pur ou d'un d'alliage de métaux)

La gaine 43 peut avoir une épaisseur comprise entre 0,1 mm et 1 mm et/ou un diamètre extérieur compris entre 0,25 et 3 mm. Sa longueur peut être d'au moins 100 mm, de préférence comprise entre 100 mm et 10 m, de préférence encore comprise entre 500 mm et 5 m, afin de permettre de déporter suffisamment les éléments sensibles de la sonde.

Ainsi, en considérant que l'empilement de plaques 2 se situe dans une première région 51 du four où la température maximale au cours du cycle de brasage est comprise entre 550 et 900 °C, de préférence entre 550 et 650 °C, on déporte la deuxième extrémité 43b de la gaine 43 par rapport à l'empilement de sorte qu'elle soit située dans une deuxième région où la température est inférieure à la température maximale dans la première région 51. De préférence la température dans la deuxième région est d'inférieure d'au moins 50 °C, de préférence encore d'au moins 100 °C à la température maximale dans la première région.

De préférence, la gaine 43 est déformable, ce qui facilite l'insertion de la sonde dans la rainure, réduisant ainsi le risque d'endommager ou de déformer la plaque 2, et permet de suivre d'éventuels changements de direction de la rainure, par exemple dans la cas d'une rainure 12 qui présente, en coupe longitudinale dans un plan parallèle aux plaques 2, un profil à plusieurs portions rectilignes formant des angles entre elles et/ou comportant au moins une portion de forme curviligne.

De préférence, la gaine 43 est configurée pour subir, en tout ou partie une déformation élastique, c'est-à-dire réversible, afin de permettre le déplacement de la sonde dans la rainure.

De préférence, on agence un matériau isolant électrique 44 entre la gaine 43 et la partie thermosensible 45 afin d'éliminer tout risque de court-circuit électrique entre les différents conducteurs entre eux et avec la gaine. Ledit matériau isolant électrique 44 peut être choisi parmi: un oxyde de magnésium, un oxyde d'aluminium.

La Figure 3 schématise différents types de sondes de températures 14 qui peuvent être utilisés dans le cadre de l'invention.

Selon une possibilité avantageuse, dont un exemple est visible en (a), la sonde de température 14 est une sonde à thermocouple comprenant une paire de fils électriques conducteurs 41, 42 formés de métaux différents. Les fils 41, 42 peuvent éventuellement être nus. Les fils conducteurs 41, 42 sont joints, généralement soudés en un point de jonction 45, dit jonction de mesure, qui forme la partie thermosensible de la sonde de température 14. La gaine 43 est remplie de matériau isolant 44 et les fils 41, 42 sont noyés dedans. Les sondes à thermocouple présente l'avantage d'un faible coût et d'une bonne résistance à la température.

Dans le cas illustré en (a), les fils conducteurs 41, 42 sont reliés chacun à des fils électriques de prolongation 401, 402 respectifs destinées à être joints aux bornes d'un circuit électrique de mesure de façon à y former des jonctions dites de référence. Une pièce de raccordement 46 formant manchon autour des liaisons entre les fils conducteurs 41, 42 et leurs fils de prolongation 401, 402 respectifs afin de les protéger. La pièce de raccordement 46 est raccordée à la deuxième extrémité 43b de la gaine 43 et se situe à l'extérieur de l'empilement.

Il est aussi envisageable, comme on le voit en (b), que les fils 41, 42 de thermocouple sortent de la gaine 43 afin d'être joints directement aux bornes du circuit de mesure.

De préférence, les métaux formant les fils conducteurs 41, 42 sont configurés pour former une sonde à thermocouple d'un type choisi parmi les suivants : le type E, le type J, le type K, le type N, le type M, le type R, le type S, le type B, qui présentent tous une résistance suffisante aux hautes températures.

Selon une autre possibilité, illustrée en (c), la sonde de température 14 est une sonde à résistance comprenant au moins deux fils conducteurs 41, 42 reliés à une résistance de mesure 45 formant la partie thermosensible de la sonde 14. La résistance de mesure 45 comporte, en tant que matériau de résistance, un matériau céramique ou un matériau métallique, en particulier du platine ou un alliage de platine. En particulier, la sonde de température 14 peut être une sonde de température à résistance de platine du type PT100. En particulier, on pourra utiliser une sonde à résistance comportant quatre fils électriques conducteurs (non illustré). Une paire de fils conducteurs sert à faire passer le courant électrique, l'autre paire sert à mesurer la tension aux bornes de la partie thermosensible. Ce type de sonde offre une précision encore améliorée. De préférence, la gaine 43 est formée en tout ou partie d'un premier matériau ayant une température de fusion supérieure à ladite température de fusion prédéterminée de l'agent de brasage 30. Ainsi, son intégrité est maintenue lors du cycle de brasage. Par exemple, le premier matériau peut être un alliage de fer, tel de l'acier inoxydable ou l'acier réfractaire.

La Figure 2 représente différents modes de réalisation de produits plats et de rainures. Les rainures 12 peuvent notamment présenter, en coupe transversale dans un plan orthogonal à la direction longitudinale z, des sections transversales de forme carrée, rectangulaire ou semi-circulaire.

On pourra adapter la forme des rainures en fonction de la forme de la sonde 14 à loger. On pourra aussi adapter la profondeur des rainures 12 et/ou l'épaisseur des produits plats pour s'adapter aux dimensions de la sonde 14 et pour placer la sonde 14 à une hauteur prédéterminée au sein de la plaque 2, la hauteur étant mesurée parallèlement à la direction d'empilement y.

Les produits plats forment ensemble une plaque 2 et des éléments intercalaires 8 sont agencés dans les passages de fluides formés de part et d'autre de la plaque 2. Le premier produit plat 21 comprend une première paire de surfaces opposées 21a, 21b et le deuxième produit plat 22 comprend une deuxième paire de surfaces opposées 22a, 22b. Ces surfaces ne sont indiquées qu'en (a) par simplicité.

Un agent de brasage 30 est agencé entre les plaques 2 ainsi qu'entre les produits plats formant une plaque munie d'une sonde selon l'invention.

De préférence, au moins les surfaces des produits plats orientées du côté des éléments intercalaires 2 et au moins l'une des surfaces d'un produit plat orientée vers l'autre produit plat comprennent un agent de brasage 30. Il est aussi possible que les deux surfaces des produits plats agencées l'une en regard de l'autre comprennent un agent de brasage 30.

La Figure 2(a) illustre le cas d'un premier produit plat 21 comprenant une rainure 12 débouchant au niveau de la surface 21a de la première paire orientée du côté du deuxième produit plat 22. L'agent de brasage 30 est disposé sur la surface 22b du deuxième produit 22 orientée du côté de la rainure 12. Selon une autre possibilité illustrée en (b), l'agent de brasage 30 est disposé sur la surface 21a au niveau de laquelle la rainure 12 débouche.

La Figure 2(e) illustre des sondes 14 de section carrée ou circulaire placées dans une rainure 12. De préférence, la sonde 14 a une section transversale circulaire et une forme générale cylindrique.

Selon une possibilité, illustrée par la Figure 2(d) le deuxième produit plat 22 peut aussi comprendre au moins une rainure 12 agencée en regard de ladite au moins une rainure 12 du premier produit plat 21 et débouchant au niveau de celle 22b des surfaces de la deuxième paire orientée du côté du premier produit plat 21. Avantageusement, les deux rainures 12 présentent une section transversale de forme semi-circulaire. Une telle configuration est particulièrement adaptée à la mise en place d'une sonde 14 de forme cylindrique.

La Figure 2(d) illustre le cas où la plaque 2 dans laquelle est réalisée la mesure de température est formée en superposant un premier produit plat 21, un deuxième produit plat 22 et un produit plat supplémentaire 23 les uns sur les autres. Le deuxième produit plat 22 étant agencé entre le premier produit plat 21 et le produit plat supplémentaire 23.

Selon un mode de réalisation, le deuxième produit plat 22 comprend une rainure 12 traversante. Cela permet de contrôler précisément le positionnement symétrique de la sonde dans la plaque lorsque l'on veut mesurer la température au centre de la plaque 2.

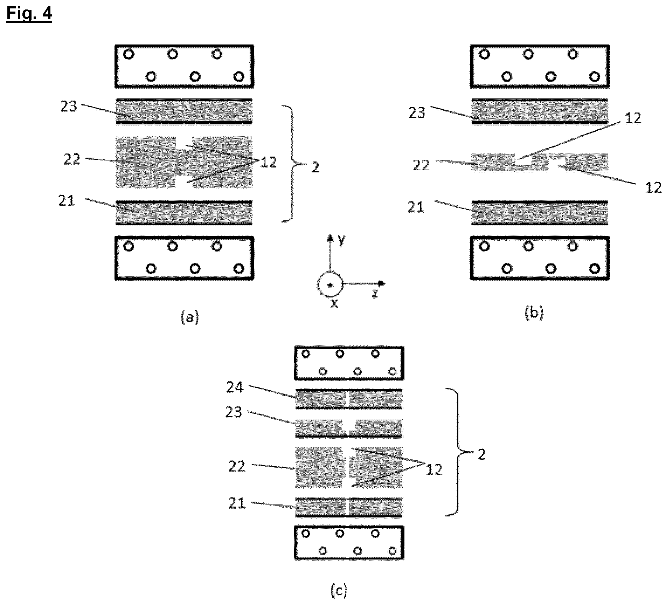

Selon un autre mode de réalisation, illustré sur la Figure 4, le deuxième produit plat 22 comprend au moins deux rainures 12 dont l'une débouche au niveau de la surface 22b de la deuxième paire orientée du côté du premier produit plat 21 et l'autre débouche au niveau de la surface 22a de la deuxième paire orientée du côté du produit plat supplémentaire 23. Cela permet l'implantation de deux sondes de température 14 à différentes hauteurs au sein de la plaque 2. A partir de la différence des températures mesurées par chacun des sondes, on peut déduire le flux thermique passant à travers la plaque 2, la plaque 2 jouant le rôle de résistance thermique.

De préférence, les deux rainures 12 sont disposées de part et d'autre et à égale distance du plan médian de la plaque 2, c'est-à-dire le plan qui est parallèle aux plaques 2 de l'empilement et qui est agencé, suivant la direction d'empilement y, à mi-hauteur de la plaque 2 formée par l'empilement de produits plats 21, 22, 23. Les sondes agencées par la suite sont aussi positionnés de cette façon. Cela permet de mesurer la différence de température qui est générée à travers la plaque, ce qui conduit directement ou indirectement à la détermination du flux thermique traversant la plaque.

L'épaisseur du deuxième produit plat 22 dans laquelle sont insérées les sondes, la distance entre les sondes et leur précision peuvent être sélectionnés afin de correspondre à la précision et à la sensibilité de mesure souhaitées.

Selon une possibilité, visible sur la Figure 4 en (a), les rainures 12 de la paire de rainures sont agencée en coïncidence l'une au-dessus de l'autre mais à des hauteurs différentes au sein de la plaque 2. Les sondes 14 insérées sont ainsi positionnés en regard l'un de l'autre. La différence de température entre les deux sondes est alors fonction du flux thermique perpendiculaire au plan médian.

Selon une autre possibilité, visible en (b), les rainures 12 sont décalées l'une par rapport à l'autre dans un plan parallèle aux plaques 2. Cela permet d'utiliser un deuxième produit plat de plus faible épaisseur, et donc de limiter la résistance thermique du deuxième produit plat et de na pas impacter la performance de l'échangeur.

Selon une autre possibilité, visible en (c), il est possible d'agencer plus de deux sondes 14 à des hauteurs différentes au sein de la plaque formée par les produits plats, en utilisant plusieurs produits plats supplémentaires. En fait, on ajoute dans l'empilement autant de produits plats supplémentaires que de sondes supplémentaires souhaitées. Cela permet de mesurer le gradient thermique avec plus de deux points de mesure, ce qui améliore encore la précision de la mesure. Cet arrangement est aussi plus robuste, et permet de détecter si l'une des sondes est défaillante.

Ainsi, dans l'exemple de la Figure 4 (c), deux produits plats supplémentaires 23, 24 sont superposés sur le deuxième produit plat 22. L'un des produits plats supplémentaires 23, 24 comprend au moins une rainure 12 débouchant du côté de l'autre des produits supplémentaires 23, 24. Ce mode de superposition permet d'agencer trois sondes 14 l'une au-dessus de l'autre.

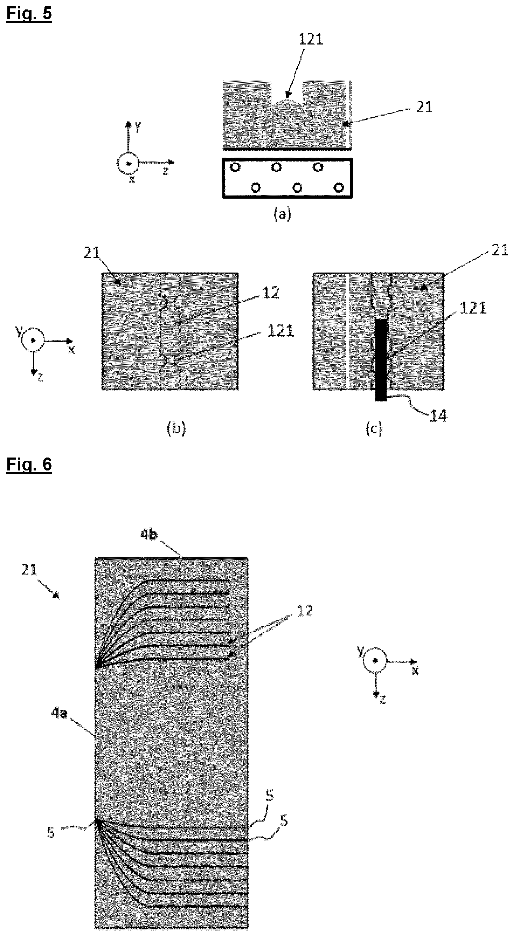

La Figure 5 schématise des modes de réalisations dans lesquels des bossages 121 sont aménagés sur la paroi interne d'une rainure 12 de façon à réduire localement la section transversale de la rainure 12. Cela permet de faciliter le coulissement de la sonde lors de son introduction en réduisant la surface de contact entre la sonde et la paroi interne de la rainure. Notons qu'il est aussi envisageable qu'au moins une portion de surface de la paroi interne présente des aspérités.

Comme ces rétrécissements locaux peuvent diminuer le contact thermique entre la sonde et la plaque, on peut les supprimer localement dans la zone où la température doit être mesurée, afin d'améliorer la représentativité de la mesure. Les bossages peuvent aussi être exagérés dans les zones où une isolation thermique est préférable, par exemple du fait que la plaque 2 a, dans cette zone, une température très différente de celle que l'on cherche à mesurer.

Notons que ladite au moins une rainure 12 peut déboucher soit par une seule ouverture situées sur un bord de la plaque 2, soit d'une part par une ouverture 5 d'un bord longitudinal 4a ou latéral 4b et d'autre part par une ouverture 5 du bord longitudinal 4a ou latéral 4b opposé. De préférence lesdites ouvertures 5 sont agencées sur deux bords longitudinaux 4a opposés. Ainsi, la rainure 12 traverse des régions de températures sensiblement égales, ce qui permet d'éviter de perturber localement le champ de température par l'apport de chaleur par la sonde elle-même.

On peut éventuellement agencer deux sondes 14 dans la rainure 12, chacune étant insérée par une des ouvertures 5.

Si l'un et/ou l'autre produit plat comprend plusieurs rainures, chacune peut déboucher sur au moins un des bords de l'échangeur par une ouverture respective distincte. Il est aussi possible que les rainures 12 se rejoignent au niveau du bord longitudinal 4a ou latéral 4b opposé pour y déboucher par une ouverture 5 commune. C'est ce que montre la Figure 6. Les rainures peuvent s'arrêter au sein de la plaque 2 (à gauche de la plaque) ou déboucher d'autre part par une pluralité d'ouvertures 5 respectives distinctes disposées le long du bord opposé (à droite de la plaque).

La Figure 6 schématise des profils possibles de rainures 12 en coupe longitudinale dans un plan parallèle aux plaques 2. De préférence, chaque rainure comprend une portion rectiligne. Chaque rainure peut comprendre plusieurs portions rectilignes formant un angle entre elles, et éventuellement au moins une portion de forme curviligne. Cela permet de regrouper plusieurs rainures jusqu'à une même ouverture 5. Les rainures 12 peuvent être au moins en partie parallèles entre elles. Un tel arrangement de plusieurs rainures permet de mesurer des températures et des flux thermiques à différentes positions dans la longueur de l'échangeur, notamment pour déterminer où ont lieu différentes réactions ou changement de phase. On obtient ainsi une cartographie des phénomènes physico-chimiques qui peuvent se produire dans l'échangeur.

La présente invention permet de mesurer des flux thermiques locaux et/ou des températures locales et ainsi de remonter au coefficient d'échange thermique local, ce qui fournit des informations sur les conditions de fonctionnement locales des échangeurs thermiques. La méthode d'assemblage de la sonde est relativement simple, non intrusive et permet un excellent contact thermique entre la sonde et la plaque à qualifier.

Bien entendu, l'invention n'est pas limitée aux exemples particuliers décrits et illustrés dans la présente demande. D'autres variantes ou modes de réalisation à la portée de l'homme du métier peuvent aussi être envisagés sans sortir du cadre de l'invention définie par les revendications ci-après. On notera notamment que plusieurs plaques 2 de l'échangeur 1 peuvent être formées de produits plats et présenter au moins une rainure 12 avec une sonde 14 selon l'invention, ces plaques pouvant présenter des configurations différentes, en particulier un nombre et/ou des formes de rainures différentes, un nombre d'ouvertures différent, des ouvertures agencées sur des bords différents.

## Revendications

1. Procédé de fabrication d'un échangeur de chaleur (1) du type à plaques et ailettes brasées comprenant l'étape de :
a) empiler avec espacement un ensemble de plaques (2) parallèlement entre elles et à une direction longitudinale (z) de façon à définir entre lesdites plaques (2) une pluralité de passages (3) adaptés pour l'écoulement suivant la direction longitudinale (z) d'un premier fluide à mettre en relation d'échange thermique avec au moins un deuxième fluide, lesdites plaques (2) étant délimitées par une paire de bords longitudinaux (4a) s'étendant suivant la direction longitudinale (z) et une paire de bords latéraux (4b) s'étendant suivant une direction latérale (x) perpendiculaire à la direction longitudinale (z),
le procédé étant **caractérisé en ce qu'**il comprend en outre les étapes suivantes :
b) former au moins une des plaques (2) empilées à l'étape a) en superposant, suivant une direction d'empilement (y) perpendiculaire aux directions longitudinale (z) et latérale (x), au moins un premier produit plat (21) et un deuxième produit plat (22) l'un sur l'autre, au moins l'un des premier et deuxième produits plats (21, 22) comprenant au moins une rainure (12) s'étendant parallèlement aux plaques (2) et débouchant vers l'extérieur de l'empilement formé à l'étape a) par au moins une ouverture (5) d'un bord latéral ou longitudinal (4a, 4b),
c) agencer au moins un agent de brasage (30) entre le premier produit plat (21) et le deuxième produit plat (22),
d) agencer au moins une sonde de température (14) dans la rainure (12), un espace libre étant ménagé entre au moins une partie de la sonde de température (14) d'une part et les parois internes de la rainure (12) d'autre part,
e) braser l'ensemble de plaques (2), y compris le premier produit plat (21) sur le deuxième produit plat (22), avec fusion de l'agent de brasage (30) et diffusion d'au moins une partie de l'agent de brasage (30) dans le premier produit plat (21) et le deuxième produit plat (22), au moins une partie de l'espace libre ménagé entre la sonde de température (14) et les parois internes de la rainure (12) étant remplie d'agent de brasage (30) solidifié.

2. Procédé selon la revendication 1, **caractérisé en ce que** la sonde de température (14) comprend :
- une partie thermosensible (45) configurée pour mesurer la température d'une surface de la plaque (2) formée à l'étape b) en un endroit souhaité,
- des organes conducteurs électriques (41, 42) configurés pour relier la partie thermosensible (45) à un circuit électrique de mesure, et
- une gaine (43) formant manchon autour de la partie thermosensible (45) et autour d'au moins une partie des organes conducteurs électriques (41, 42), la gaine (43) s'étendant entre une première extrémité (43a) agencée au niveau de la partie thermosensible (45) et une deuxième extrémité (43b) agencée à l'extérieur de l'empilement de plaques (2), de préférence la deuxième extrémité (43b) est située à une distance d'au moins 100 mm de l'ouverture (5).

3. Procédé selon la revendication 2, **caractérisé en ce que** la gaine (43) comprend un matériau métallique choisi parmi : l'aluminium, le nickel, le platine, le tungstène, un alliage d'aluminium, un alliage de nickel, un alliage de platine, un alliage de tungstène, un acier inoxydable, un acier réfractaire.

4. Procédé selon l'une des revendications 2 ou 3, **caractérisé en ce que** la gaine (43) a une épaisseur comprise entre 0,1 et 1 mm et/ou un diamètre extérieur compris entre 0,5 et 3 mm.

5. Procédé selon l'une des revendications 2 à 4, **caractérisé en ce que** la gaine (43) a une longueur comprise entre 100 et 10000 mm.

6. Procédé selon l'une des revendications 2 à 5, **caractérisé en ce que** la gaine (43) est déformable.

7. Procédé selon l'une des revendications précédentes, **caractérisé en ce que** la sonde de température (14) comprend un matériau isolant électrique (44) agencé entre la gaine (43) et la partie thermosensible (45), en particulier ledit matériau isolant électrique (44) est choisi parmi : un oxyde de magnésium, un oxyde d'aluminium.

8. Procédé selon l'une des revendications précédentes, **caractérisé en ce que** la sonde de température (14) est une sonde à thermocouple comprenant une paire de fils conducteurs (41, 42) formés de métaux différents, les fils conducteurs (41, 42) étant joints en un point de jonction (45), dit jonction de mesure, formant la partie thermosensible de la sonde de température (14).

9. Procédé selon la revendication 8, **caractérisé en ce que** les fils conducteurs (41, 42) sont reliés chacun à des fils de prolongation (401, 402) respectifs destinées à être joints aux bornes d'un circuit électrique de mesure de façon à y former des jonctions dites de référence, une pièce de raccordement (46) formant manchon autour des liaisons entre les fils conducteurs (41, 42) et leurs fils de prolongation (401, 402) respectifs, ladite pièce de raccordement (46) étant raccordée à la deuxième extrémité (43b) de la gaine (43).

10. Procédé selon l'une des revendications 8 ou 9, **caractérisé en ce que** les métaux formant les fils conducteurs (41, 42) sont configurés pour former une sonde à thermocouple d'un type choisi parmi : le type E, le type J, le type K, le type N, le type M, le type R, le type S, le type B.

11. Procédé selon l'une des revendications 1 à 7, **caractérisé en ce que** la sonde de température (14) est une sonde à résistance comprenant une paire de fils conducteurs (41, 42) reliés une résistance de mesure (45) formant la partie thermosensible de la sonde de température (14), la résistance de mesure (45) comportant, en tant que matériau de résistance, un matériau céramique ou un matériau métallique, en particulier du platine ou un alliage de platine.

12. Procédé selon l'une des revendications précédentes, **caractérisé en ce que** l'étape e) a lieu dans un four de brasage, l'empilement de plaques (2) étant situé dans une première région (51) du four où la température maximale au cours du cycle de brasage est comprise entre 550 et 900 °C, de préférence entre 550 et 650 °C, et la deuxième extrémité (43b) de la gaine (43) étant située dans une deuxième région où la température est inférieure à ladite température maximale dans la première région (51).

13. Echangeur de chaleur du type à plaques et ailettes brasées, comprenant un ensemble de plaques (2) parallèles entre elles et à une direction longitudinale (z) de façon à définir entre lesdites plaques (2) une pluralité de passages (3) adaptés pour l'écoulement d'un premier fluide à mettre en relation d'échange thermique avec au moins un deuxième fluide, lesdits plaques (2) étant délimitées par une paire de bords longitudinaux (4a) s'étendant suivant la direction longitudinale (z) et une paire de bords latéraux (4b) s'étendant suivant une direction latérale (x) perpendiculaire à la direction longitudinale (z), **caractérisé en ce qu'**au moins une des plaques (2) étant formée par au moins un premier produit plat (21) et un deuxième produit plat (22) et superposés l'un sur l'autre suivant une direction d'empilement (y) perpendiculaire aux directions longitudinale (z) et latérale (x) et brasés au moyen d'un revêtement ou une feuille d'agent de brasage (30) ayant une température de fusion prédéterminée agencée sur au moins une de leurs surfaces opposées (21a, 22b), au moins l'un des premier et deuxième produits plats (21, 22) comprenant au moins une rainure (12) s'étendant parallèlement aux plaques (2) et débouchant vers l'extérieur de l'empilement par au moins une ouverture (5) d'un bord latéral ou longitudinal (4a, 4b), au moins une sonde de température (14) étant agencé dans la rainure (12) et au moins une partie de l'espace entre la sonde de température (14) et les parois internes de la rainure (12) étant remplie d'agent de brasage (30) solidifié.

14. Echangeur selon la revendication 13, **caractérisé en ce que** la sonde de température (14) comprend une partie thermosensible (45) configurée pour mesurer la température d'une surface de la plaque (2) formée à l'étape b) en un endroit souhaité, des organes conducteurs électriques (41, 42) configurés pour relier la partie thermosensible (45) à un circuit électrique de mesure, et une gaine (43) formant manchon autour de la partie thermosensible (45) et d'au moins une partie des organes conducteurs électriques (41, 42), la gaine (43) s'étendant entre une première extrémité (43a) agencée au niveau de la partie thermosensible (45) et une deuxième extrémité (43b) agencée à l'extérieur de l'empilement de plaques (2), de préférence la deuxième extrémité (43b) est située à une distance d'au moins 100 mm, de préférence comprise entre 100 et 10000 mm, de l'ouverture (5).

## Patentansprüche

1. Verfahren zur Herstellung eines Wärmetauschers (1) vom Typ mit gelöteten Platten und Lamellen, umfassend den folgenden Schritt:
a) Stapeln einer Reihe von Platten (2) in einem Abstand zueinander und parallel zu einer Längsrichtung (z), so dass zwischen den Platten (2) mehrere Durchgänge (3) entstehen, die für den Durchfluss eines ersten Fluids in Längsrichtung (z) ausgelegt sind, das mit mindestens einem zweiten Fluid in Wärmeaustausch gebracht werden soll, wobei die Platten (2) durch ein in Paar Längskanten (4a), die sich in Längsrichtung (z) erstrecken, und ein Paar Seitenkanten (4b), die sich in einer zur Längsrichtung (z) senkrechten Querrichtung (x) erstrecken, begrenzt sind,
wobei das Verfahren **dadurch gekennzeichnet ist, dass** es außerdem die folgenden Schritte umfasst:
b) Bilden mindestens einer der in Schritt a) gestapelten Platten (2) durch Übereinanderlegen mindestens eines ersten flachen Produkts (21) und eines zweiten flachen Produkts (22) in einer Stapelrichtung (y) senkrecht zur Längsrichtung (z) und zur Querrichtung (x), wobei mindestens eines der ersten und zweiten flachen Produkte (21, 22) mindestens eine Nut (12) aufweist, die sich parallel zu den Platten (2) erstreckt und durch mindestens eine Öffnung (5) einer Seiten- oder Längskante (4a, 4b) nach außen aus dem in Schritt a) gebildeten Stapel mündet,
c) Anordnen mindestens eines Lötmittels (30) zwischen dem ersten flachen Produkt (21) und dem zweiten flachen Produkt (22),
d) Anordnen mindestens einer Temperatursonde (14) in der Nut (12), wobei zwischen mindestens einem Teil der Temperatursonde (14) einerseits und den Innenwänden der Nut (12) andererseits ein Freiraum vorgesehen ist,
e) Löten der Plattenanordnung (2) einschließlich des ersten flachen Produkts (21) auf das zweite flache Produkt (22) unter Schmelzen des Lötmittels (30) und Diffundieren mindestens eines Teils des Lötmittels (30) in das erste flache Produkt (21) und das zweite flache Produkt (22), wobei mindestens ein Teil des Freiraums zwischen der Temperatursonde (14) und den Innenwänden der Nut (12) mit erstarrtem Lötmittel (30) gefüllt ist.

2. Verfahren nach Anspruch 1, **dadurch gekennzeichnet, dass** der Temperaturfühler (14) umfasst:
- einen wärmeempfindlichen Teil (45), der so konfiguriert ist, dass er die Temperatur einer Oberfläche der in Schritt b) geformten Platte (2) an einer gewünschten Stelle misst,
- elektrisch leitende Elemente (41, 42), die so konfiguriert sind, dass sie den wärmeempfindlichen Teil (45) mit einem elektrischen Messkreis verbinden, und
- eine Hülle (43), die eine Manschette um den wärmeempfindlichen Teil (45) und um mindestens einen Teil der elektrischen Leiterelemente (41, 42) bildet, wobei sich die Hülle (43) zwischen einem ersten Ende (43a), das am wärmeempfindlichen Teil (45) angeordnet ist, und einem zweiten Ende (43b), das außerhalb des Plattenstapels (2) angeordnet ist, wobei das zweite Ende (43b) vorzugsweise in einem Abstand von mindestens 100 mm von der Öffnung (5) angeordnet ist.

3. Verfahren nach Anspruch 2, **dadurch gekennzeichnet, dass** die Hülle (43) ein metallisches Material umfasst, das ausgewählt ist aus: Aluminium, Nickel, Platin, Wolfram, einer Aluminiumlegierung, einer Nickellegierung, einer Platinlegierung, einer Wolframlegierung, einem rostfreien Stahl, einem hitzebeständigen Stahl.

4. Verfahren nach einem der Ansprüche 2 oder 3, **dadurch gekennzeichnet, dass** die Hülle (43) eine Dicke zwischen 0,1 und 1 mm und/oder einen Außendurchmesser zwischen 0,5 und 3 mm aufweist.

5. Verfahren nach einem der Ansprüche 2 bis 4, **dadurch gekennzeichnet, dass** die Hülle (43) eine Länge zwischen 100 und 10000 mm aufweist.

6. Verfahren nach einem der Ansprüche 2 bis 5, **dadurch gekennzeichnet, dass** die Hülle (43) verformbar ist.

7. Verfahren nach einem der vorstehenden Ansprüche, **dadurch gekennzeichnet, dass** die Temperatursonde (14) ein elektrisch isolierendes Material (44) umfasst, das zwischen der Hülle (43) und dem wärmeempfindlichen Teil (45) angeordnet ist, wobei das elektrisch isolierende Material (44) insbesondere aus Magnesiumoxid oder Aluminiumoxid ausgewählt ist.

8. Verfahren nach einem der vorstehenden Ansprüche, **dadurch gekennzeichnet, dass** die Temperatursonde (14) eine Thermoelementsonde ist, die ein Paar Leiterdrähte (41, 42) aus unterschiedlichen Metallen umfasst, wobei die Leiterdrähte (41, 42) an einer Verbindungsstelle (45), der sogenannten Messstelle, miteinander verbunden sind ( ) und den wärmeempfindlichen Teil der Temperatursonde (14) bilden.

9. Verfahren nach Anspruch 8, **dadurch gekennzeichnet, dass** die Leiterdrähte (41, 42) jeweils mit entsprechenden Verlängerungsdrähten (401, 402) verbunden sind, die dazu bestimmt sind, mit den Anschlüssen eines elektrischen Messkreises verbunden zu werden, um dort sogenannte Referenzverbindungen zu bilden, ein Verbindungsstück (46), das eine Hülse um die Verbindungen zwischen den Leitungsdrähten (41, 42) und ihren jeweiligen Verlängerungsdrähten (401, 402) bildet, wobei das Verbindungsstück (46) mit dem zweiten Ende (43b) der Hülle (43) verbunden ist.

10. Verfahren nach einem der Ansprüche 8 oder 9, **dadurch gekennzeichnet, dass** die die Leiterdrähte (41, 42) bildenden Metalle so konfiguriert sind, dass sie eine Thermoelementsonde eines Typs bilden, der aus den folgenden Typen ausgewählt ist: Typ E, Typ J, Typ K, Typ N, Typ M, Typ R, Typ S, Typ B.

11. Verfahren nach einem der Ansprüche 1 bis 7, **dadurch gekennzeichnet, dass** die Temperatursonde (14) eine Widerstandssonde ist, die ein Paar von Leiterdrähten (41, 42) umfasst, die mit einem Messwiderstand (45) verbunden sind, der den wärmeempfindlichen Teil der Temperatursonde (14) bildet, wobei der Messwiderstand (45) als Widerstandsmaterial ein keramisches Material oder ein metallisches Material, insbesondere Platin oder eine Platinlegierung, aufweist.

12. Verfahren nach einem der vorstehenden Ansprüche, **dadurch gekennzeichnet, dass** Schritt e) in einem Lötöfen stattfindet, wobei sich der Plattenstapel (2) in einem ersten Bereich (51) des Ofens angeordnet ist, in dem die maximale Temperatur während des Lötzyklus zwischen 550 und 900 °C, vorzugsweise zwischen 550 und 650 °C, liegt, und das zweite Ende (43b) der Hülle (43) in einem zweiten Bereich angeordnet ist, in dem die Temperatur unter der genannten maximalen Temperatur im ersten Bereich (51) liegt.

13. Wärmetauscher vom Typ mit gelöteten Platten und Lamellen, umfassend eine Anordnung von Platten (2), die parallel zueinander und zu einer Längsrichtung (z) angeordnet sind, so dass zwischen den Platten (2) eine Vielzahl von Durchlässen (3) definiert ist, die für den Durchfluss eines ersten Fluids ausgelegt sind, das mit mindestens einem zweiten Fluid in Wärmeaustausch gebracht werden soll, wobei die Platten (2) durch ein Paar von Längskanten (4a) , die sich in Längsrichtung (z) erstrecken, und ein Paar von Seitenkanten (4b) begrenzt sind, die sich in einer zur Längsrichtung (z) senkrechten Querrichtung (x) erstrecken, **dadurch gekennzeichnet, dass** mindestens eine der Platten (2) aus mindestens einem ersten flachen Produkt (21) und einem zweiten flachen Produkt (22) gebildet ist und in einer Stapelrichtung (y) senkrecht zur Längsrichtung (z) und zur Querrichtung (x) übereinander angeordnet und mittels einer Beschichtung oder einer Folie aus einem Lötmittel (30) mit einer vorbestimmten Schmelztemperatur, die auf mindestens einer ihrer gegenüberliegenden Oberflächen (21a, 22b) angeordnet ist, verlötet ist, wobei mindestens eines der ersten und zweiten flachen Produkte (21, 22) mindestens eine Nut (12) aufweist, die sich parallel zu den Platten (2) erstreckt und durch mindestens eine Öffnung (5) einer Seiten- oder Längskante (4a, 4b) nach außen aus dem Stapel mündet, wobei mindestens ein Temperaturfühler (14) in der Nut (12) angeordnet ist und mindestens ein Teil des Raums zwischen dem Temperaturfühler (14) und den Innenwänden der Nut (12) mit verfestigtem Lötmittel (30) gefüllt ist.

14. Wärmetauscher nach Anspruch 13, **dadurch gekennzeichnet, dass** die Temperatursonde (14) einen wärmeempfindlichen Teil (45) umfasst, der so konfiguriert ist, dass er die Temperatur einer Oberfläche der in Schritt b) gebildeten Platte (2) an einer gewünschten Stelle misst, elektrische Leiterelemente (41, 42), die so konfiguriert sind, dass sie den wärmeempfindlichen Teil (45) mit einem elektrischen Messkreis verbinden, und eine Hülle (43), die den wärmeempfindlichen Teil (45) und mindestens einen Teil der elektrischen Leiterelemente (41, 42) ummantelt, wobei sich die Hülle (43) zwischen einem ersten Ende (43a), das am wärmeempfindlichen Teil (45) angeordnet ist, und einem zweiten Ende (43b), das außerhalb des Plattenstapels angeordnet ist, erstreckt (2) angeordnet ist, wobei das zweite Ende (43b) vorzugsweise in einem Abstand von mindestens 100 mm, vorzugsweise zwischen 100 und 10000 mm, von der Öffnung (5) angeordnet ist.

## Claims

1. A process of manufacturing a brazed plate and fin heat exchanger (1) comprising the step of:
a) stacking a set of plates (2) in parallel with each other and with a longitudinal direction (z) so as to define between said plates (2) a plurality of passages (3) adapted for the flow in the longitudinal direction (z) of a first fluid to be brought into heat exchange relationship with at least a second fluid, said plates (2) being delimited by a pair of longitudinal edges (4a) extending along the longitudinal direction (z) and a pair of lateral edges (4b) extending along a lateral direction (x) perpendicular to the longitudinal direction (z),
the process being **characterized in that** it further comprises the following steps:
b) forming at least one of the plates (2) stacked in step a) by superimposing, in a stacking direction (y) perpendicular to the longitudinal (z) and lateral (x) directions, at least a first flat product (21) and a second flat product (22) on top of each other, at least one of the first and second flat products (21, 22) comprising at least one groove (12) extending parallel to the plates (2) and opening outwards from the stack formed in step a) through at least one opening (5) in a lateral or longitudinal edge (4a, 4b),
c) arranging at least one brazing agent (30) between the first flat product (21) and the second flat product (22),
d) arranging at least one temperature probe (14) in the groove (12), with a free space being provided between at least part of the temperature probe (14) on the one hand and the inner walls of the groove (12) on the other hand,
e) brazing the set of plates (2), including the first flat product (21) onto the second flat product (22), with melting of the brazing agent (30) and diffusion of at least part of the brazing agent (30) into the first flat product (21) and the second flat product (22), at least part of the free space between the temperature probe (14) and the inner walls of the groove (12) being filled with solidified solder (30).

2. Process according to claim 1, **characterized in that** the temperature probe (14) comprises:
- a heat-sensitive part (45) configured to measure the temperature of a surface of the plate (2) formed in step b) at a desired location,
- electrically conductive members (41, 42) configured to connect the heat-sensitive portion (45) to an electrical measuring circuit, and
- a sheath (43) forming a sleeve around the heat-sensitive portion (45) and around at least a portion of the electrical conductive members (41, 42), the sheath (43) extending between a first end (43a) arranged at the heat-sensitive portion (45) and a second end (43b) arranged outside the stack of plates (2), preferably the second end (43b) is located at a distance of at least 100 mm from the opening (5).

3. Process according to claim 2, **characterized in that** the sheath (43) comprises a metallic material selected from: aluminum, nickel, platinum, tungsten, an aluminum alloy, a nickel alloy, a platinum alloy, a tungsten alloy, stainless steel, refractory steel.

4. Process according to one of claims 2 or 3, **characterized in that** the sheath (43) has a thickness between 0.1 and 1 mm and/or an outer diameter between 0.5 and 3 mm.

5. Process according to one of claims 2 to 4, **characterized in that** the sheath (43) has a length between 100 and 10,000 mm.

6. Process according to one of claims 2 to 5, **characterized in that** the sheath (43) is deformable.

7. Process according to one of the preceding claims, **characterized in that** the temperature probe (14) comprises an electrically insulating material (44) arranged between the sheath (43) and the heat-sensitive part (45), in particular said electrically insulating material (44) is chosen from: magnesium oxide, aluminum oxide.

8. Process according to one of the preceding claims, **characterized in that** the temperature probe (14) is a thermocouple probe comprising a pair of conductive wires (41, 42) made of different metals, the conductive wires (41, 42) being joined together (45) at a junction point (45), known as the measuring junction, forming the heat-sensitive part of the temperature probe (14).

9. Process according to claim 8, **characterized in that** the conductive wires (41, 42) are each connected to respective extension wires (401, 402) intended to be joined to the terminals of an electrical measurement circuit so as to form so-called reference junctions therein, a connecting piece (46) forming a sleeve around the connections between the conductive wires (41, 42) and their respective extension wires (401, 402), said connecting piece (46) being connected to the second end (43b) of the sheath (43).

10. Process according to one of claims 8 or 9, **characterized in that** the metals forming the conductive wires (41, 42) are configured to form a thermocouple probe of a type selected from: type E, type J, type K, type N, type M, type R, type S, type B.

11. Process according to one of claims 1 to 7, **characterized in that** the temperature probe (14) is a resistance probe comprising a pair of conductive wires (41, 42) connected to a measuring resistor (45) forming the temperature-sensitive part of the temperature probe (14), the measuring resistor (45) comprising, as resistor material, a ceramic material or a metallic material, in particular platinum or a platinum alloy.

12. Process according to one of the preceding claims, **characterized in that** step e) takes place in a soldering furnace, the stack of plates (2) being located in a first region (51) of the furnace where the maximum temperature during the brazing cycle is between 550 and 900°C, preferably between 550 and 650°C, and the second end (43b) of the sheath (43) being located in a second region where the temperature is lower than said maximum temperature in the first region (51).

13. A brazed plate and fin type heat exchanger, comprising a set of plates (2) parallel to each other and to a longitudinal direction (z) so as to define between said plates (2) a plurality of passages (3) adapted for the flow of a first fluid to be brought into heat exchange relationship with at least a second fluid, said plates (2) being delimited by a pair of longitudinal edges (4a) extending along the longitudinal direction (z) and a pair of lateral edges (4b) extending along a lateral direction (x) perpendicular to the longitudinal direction (z), **characterized in that** at least one of the plates (2) is formed by at least one first flat product (21) and a second flat product (22) and superimposed on one another in a stacking direction (y) perpendicular to the longitudinal (z) and lateral (x) directions and brazed by means of a coating or sheet of brazing agent (30) having a predetermined melting temperature arranged on at least one of their opposite surfaces (21a, 22b), at least one of the first and second flat products (21, 22) comprising at least one groove (12) extending parallel to the plates (2) and opening to the outside of the stack through at least one opening (5) in a lateral or longitudinal edge (4a, 4b), at least one temperature probe (14) being arranged in the groove (12) and at least part of the space between the temperature probe (14) and the inner walls of the groove (12) being filled with solidified solder (30).

14. Heat exchanger according to claim 13, **characterized in that** the temperature sensor (14) comprises a thermosensitive portion (45) configured to measure the temperature of a surface of the plate (2) formed in step b) at a desired location, electrical conductive members (41, 42) configured to connect the heat-sensitive portion (45) to an electrical measurement circuit, and a sheath (43) forming a sleeve around the heat-sensitive portion (45) and at least a portion of the electrical conductive members (41, 42), the sheath (43) extending between a first end (43a) arranged at the heat-sensitive portion (45) and a second end (43b) arranged outside the stack of plates (2), preferably the second end (43b) is located at a distance of at least 100 mm, preferably between 100 and 10,000 mm, from the opening (5).
